**Europäisches Patentamt**

**European Patent Office**

**Office européen des brevets**

(19)

(11) Numéro de publication : **0 334 743 B1**

# (12) FASCICULE DE BREVET EUROPEEN

(45) Date de publication du fascicule du brevet :
**26.08.92 Bulletin 92/35**

(51) Int. Cl.$^5$ : **H01H 13/70, G09B 21/00**

(21) Numéro de dépôt : **89400783.0**

(22) Date de dépôt : **21.03.89**

(54) **Terminal de communication à effet tactile.**

(30) Priorité : **25.03.88 FR 8803920**

(43) Date de publication de la demande :
**27.09.89 Bulletin 89/39**

(45) Mention de la délivrance du brevet :
**26.08.92 Bulletin 92/35**

(84) Etats contractants désignés :
**CH DE GB IT LI NL SE**

(56) Documents cités :
**WO-A-86/03870**
**DE-A- 2 728 902**
**US-A- 4 032 931**

(73) Titulaire : **SEXTANT AVIONIQUE**
**Immeuble le Galilée Parc Tertiaire de Meudon**
**5/7, rue Jeanne Braconnier**
**F-92366 Meudon la Foret Cédex (FR)**

(72) Inventeur : **Fagard, Pierre**
**7, rue Jules Massenet**
**F-78180 Montigny le Bretonneux (FR)**

(74) Mandataire : **Marquer, Francis et al**
**Cabinet Moutard 35, Avenue Victor Hugo**
**F-78960 Voisins le Bretonneux (FR)**

EP 0 334 743 B1

## Description

La présente invention concerne un terminal de communication du type permettant à un opérateur de transmettre manuellement des informations, par exemple en vue d'effectuer une commande, un réglage ou même de permettre un échange convivial avec un processeur.

D'une manière générale, on sait que pour assurer ce type de communication, on utilise habituellement des claviers comprenant un ensemble de touches le plus souvent constituées par des boutons-poussoirs, de type électromécanique, regroupées par blocs dans un châssis éventuellement équipé de moyens permettant d'effectuer un affichage.

Bien entendu, à chacun de ces boutons-poussoirs est affecté un symbole ou une légende qui indique sa fonction. Dans le cas de claviers relégendables, ces symboles ou ces légendes peuvent être modifiés pour les approprier à de nouvelles fonctions.

Dans certains cas, ces touches peuvent être directement associées à des moyens d'affichage électroniques pilotés par le processeur, qui indiquent en permanence les fonctions qui leurs sont attribuées par une symbologie variable selon le mode de fonctionnement de l'ensemble.

Il s'avère que dans de nombreuses applications, l'actionnement d'une touche, c'est-à-dire la transmission d'une information à un processus, doit être suivi d'une réponse émanant du processus, cette réponse pouvant par exemple consister en un accusé-réception, en une information de validation, en une information indiquant que la fonction demandée est exécutée ou est en cours d'exécution, etc...

Or, jusqu'ici, cette réponse était le plus souvent assurée par un signal lumineux, par exemple un voyant lumineux associé à la touche et/ou un signal sonore (bip sonore).

De même, lors de la transmission d'une information par l'actionnement d'une touche, il est fréquemment nécessaire de s'assurer que cette transmission est due à une action volontaire de l'opérateur, et non à une action fortuite. C'est la raison pour laquelle on réalise des touches à effet tactile comprenant un mécanisme approprié qui n'assure la commutation électrique que lorsque la pression exercée sur la touche dépasse un seuil prédéterminé et, lorsque cette commutation s'effectue, engendre, sur le doigt de l'opérateur, une sensation caractéristique (confirmation).

On constate, en pratique, que les solutions précédemment évoquées nécessitent un montage mécanique encombrant pour chaque touche, ce qui limite, entre autres, les capacités de modification de la taille des touches et ses possibilités d'intégration dans des appareillages de dimensions réduites.

En outre, les solutions faisant appel à des signaux de réponse lumineux ou sonores ne conviennent pas bien dans le cas où l'opérateur a une tâche qui ne lui permet pas de concentrer son attention sur le clavier et doit agir sur celui-ci par des actions réflexes, et lorsqu'en outre il se trouve dans un environnement éventuellement bruyant, où coexistent déjà d'autres moyens de communication sonores.

L'invention a donc plus particulièrement pour but de supprimer ces inconvénients.

Elle propose à cet effet un terminal de communication du type faisant intervenir :

– un panneau de commutation incluant une multiplicité d'éléments de commutation respectivement munis de plages de commande sensibles à une action manuelle, qui s'étendent dans au moins un plan ; et

– au moins une grille située parallèlement audit plan et à faible distance de celui-ci, cette grille présentant une pluralité d'orifices délimitant les susdites plages et permettant leur accès par un doigt de l'opérateur. Un tel dispositif est par exemple décrit dans le document US-A-4 032 931.

Selon l'invention, ce terminal est plus particulièrement caractérisé en ce que la susdite grille est mobile par rapport au susdit panneau et est couplée à des moyens d'actionnement servant à appliquer à la grille des impulsions de mouvement de manière à engendrer sur le doigt de l'opérateur agissant sur une plage de commande, un stimuli physiologique constituant la susdite réponse.

Bien entendu, la conformation des susdits orifices devra être prévue de manière à ce que le doigt de l'opérateur qui agit sur une plage de commande puisse être sollicité par la grille. Avantageusement, ces orifices pourront présenter des rebords évasés vers l'extérieur pour permettre un guidage du doigt de l'opérateur vers la plage de commande qu'il aura sélectionnée.

Il convient de noter que l'invention ne se limite pas à un type de panneau de commutation particulier : il pourra, par exemple, consister en un clavier à touches classiques ou en un clavier plat à contacts électroniques sensitifs de type capacitif, inductif, à onde de surface, etc...

Selon une autre caractéristique de l'invention, dans le but d'éviter toute possibilité de transmission de signaux de commande erronés dus, par exemple, à des actionnements involontaires des éléments de commutation, le panneau de commutation est monté sur un support, par l'intermédiaire de moyens transducteurs. Dans ce cas, le signal transmis par ces moyens tranducteurs à la suite d'une pression exercée sur le panneau de commutation, lors d'un actionnement d'un élément de commutation, pourra alors servir de signal de validation du signal de commande émis par ledit élément.

Un mode de réalisation de l'invention sera décrit ci-après, à titre d'exemple non limitatif, avec référence aux dessins annexés dans lesquels :

La figure 1 est une vue éclatée schématique d'un terminal de communication selon l'invention, associé à un calculateur ;

La figure 2 est une vue en coupe d'un mode d'exécution de l'ensemble grille/panneau de commutation/moyens d'affichage du terminal représenté sur la figure 1 ;

La figure 3 est une vue schématique illustrant les moyens de validation des signaux émis par le panneau de commutation ;

La figure 4 est une représentation schématique d'un mode d'exécution du dispositif d'actionnement de la grille.

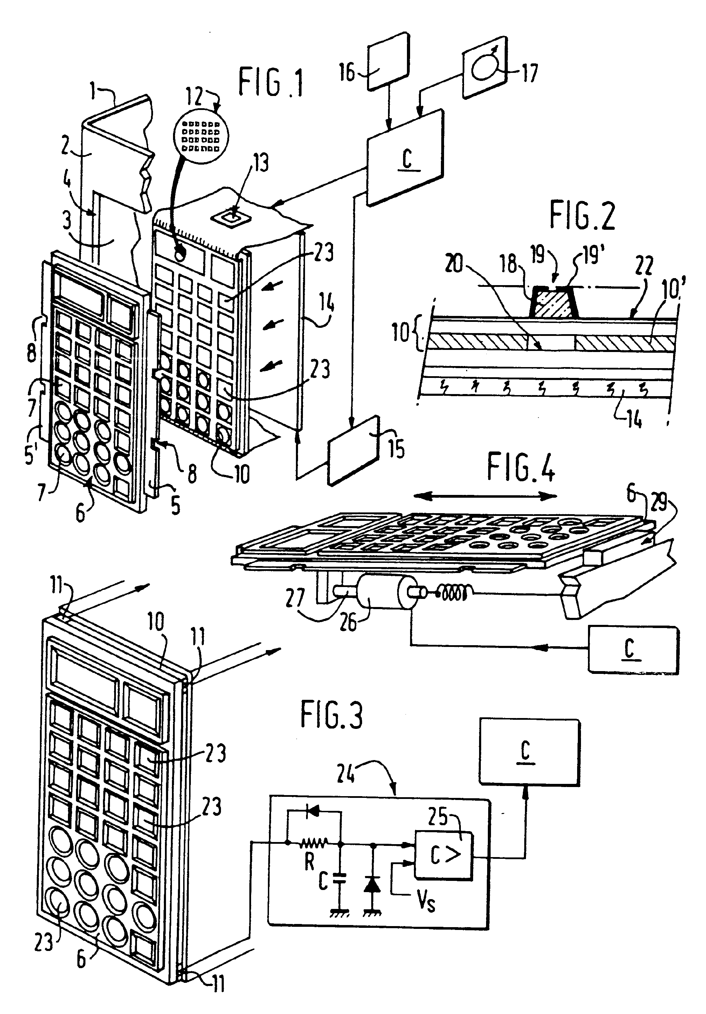

Tel que représenté sur la figure 1, le terminal associé au calculateur C se compose d'un bâti se présentant sous la forme d'un boîtier parallélépipédique 1 (partiellement représenté) dont la face antérieure 2 comprend une fenêtre rectangulaire 3 dont les deux bords latéraux opposés 4 sont munis de glissières.

Dans ces deux glissières viennent s'engager, de manière à pouvoir coulisser, les deux bordures latérales 5, 5′ d'une grille amovible 6 portant une pluralité d'orifices 7 répartis en deux groupes, à savoir : un groupe d'orifices circulaires et un groupe d'orifices carrés. Il serait également possible d'utiliser des orifices présentant des formes différentes. On notera à ce sujet que l'utilisation d'orifices triangulaires disposés en quinconce permet d'atteindre une densité d'orifices maximale.

La hauteur de la grille 6 est prévue légèrement supérieure à la hauteur de la fenêtre, de manière à autoriser un léger déplacement de la grille 6 sans découvrir la fenêtre 3.

Les deux bordures latérales 5, 5′ de la grille 6 présentent des encoches personnalisées 8 détectables par un dispositif d'identification connecté au calculateur C.

Dans cet exemple, le panneau de commutation 10 assume à la fois le rôle de clavier et le rôle d'afficheur, non seulement pour l'affichage de la symbologie affectée aux éléments de commutation, mais également à l'affichage d'informations diverses.

Ce panneau 10, de forme plate, sensiblement aux mêmes dimensions que la fenêtre, est monté à l'intérieur du boîtier 2 de manière à venir s'appliquer contre la grille 6. Ce montage est effectué grâce à des éléments de fixation périphériques 11 (visibles sur la figure 3) associés à des capteurs tels que des jauges de contrainte, des capteurs de pression piézoélectrique, ou tout autre dispositif capable de transformer une force appliquée normalement au panneau 10 en un signal électrique, dont le rôle sera expliqué dans la suite de la description.

D'une façon plus précise, ce panneau 10 comprend, pour sa fonction d'affichage, un afficheur 10′ à réseau de type matriciel capable de constituer une image ou un texte par l'excitation d'éléments d'image ou pixels (représentés schématiquement dans le cercle 12), convenablement adressés par un dispositif électronique 13 lui-même piloté par le calculateur C.

Il peut avantageusement comprendre un dispositif d'affichage à cristaux liquides de type matriciel, à matrice active, fonctionnant en mode transmissif et/ou réflectif.

Selon ce mode de réalisation, le pas de la matrice de points de l'afficheur (sa résolution) est choisi suffisamment fin de façon à permettre la réalisation de caractères et de graphismes divers tout en conservant la taille du pixel à la limite du pouvoir séparateur de l'oeil, compte-tenu de la distance entre l'oeil de l'opérateur et le dispositif.

Un dispositif d'éclairage 14, de faible épaisseur, par exemple un panneau électroluminescent ou bien un système de tubes fluorescents destinés à assurer la vision des légendes en transmission, est disposé derrière l'afficheur.

Un circuit d'alimentation 15, piloté par le microcalculateur C, adapte le niveau d'éclairement fourni par le dispositif d'éclairage 14 en fonction des commandes de l'opérateur sur un organe de réglage 16 éventuellement complété par un capteur 17 de luminosité ambiante.

Comme précédemment mentionné, la grille amovible 6 peut se présenter sous différents modèles présentant des orifices variables en taille, en forme et en localisation. Cette disposition implique une gestion de la configuration de l'afficheur en relation avec la grille disposée sur sa surface, dont le type est identifié par l'ensemble calculateur C, encoches 8, dispositif d'identification.

Avantageusement, le profil 18 (partiellement représenté figure 2) et la matière utilisée pour la grille 6 permettront de réaliser une gravure 19 et une peinture 19′ localisée uniquement et partiellement sur la face supérieure de la grille 6. De cette façon, il est possible de délimiter des zones de la grille 6 par exemple de couleurs différentes et présentant une gravure 19, qu'il sera possible de rendre visible de nuit au moyen du dispositif d'éclairage 14 transmis au travers de l'afficheur, grâce à une excitation des pixels 12 d'une zone 20 du panneau 10 située sous la grille au niveau de la gravure à faire apparaître, la lumière diffusant alors dans la grille 6, jusqu'à la gravure supérieure 19, aux endroits voulus.

La fonction clavier du panneau 10 est assurée par une surface tactile 22 disposée entre la grille 6 et l'afficheur. Cette surface tactile pouvant être réalisée notamment à l'aide de moyens connus, tels que les claviers transparents à contact, des systèmes capacitifs ou inductifs ou tout autre système équivalent. Cette surface tactile 22, pilotée par le calculateur C, peut être divisée en une pluralité de zones d'appui 23 formant, en quelque sorte, des touches qui sont chacune situées en regard d'un orifice 7 de la grille 6. La configuration et les emplacements de ces zones 23 sont déterminés par le calculateur C d'après le signal d'identification de la grille 6 émis par l'ensemble formé par les encoches 8 et le dispositif d'identification qui leur est associé.

La validation du signal de commande émis par une zone d'appui 23 lorsqu'elle se trouve sollicitée, est assurée grâce aux capteurs 11 associés aux éléments de fixation du panneau 10 (figure 3).

Ces capteurs 11 permettent de détecter une pression volontairement exercée par l'opérateur sur une zone d'appui 23 de la surface tactile 22 pour confirmer sa volonté d'agir sur cette zone 23.

Ils sont reliés au calculateur C par l'intermédiaire d'un circuit électronique 24 dont le rôle est de discriminer un appui volontaire exercé sur une surface d'appui 23 (caractérisé par un signal apériodique de valeur moyenne non nulle) d'un effort vibratoire dû à l'environnement (caractérisé par une valeur moyenne sensiblement nulle).

Ce circuit électronique 24 comprend donc une cellule de filtrage des signaux émis par les capteurs (circuit R-C) et un comparateur 25 qui compare le signal détecté et filtré à un signal de seuil VS éventuellement réglable.

Lors du franchissement de ce seuil, ce comparateur 25 transmet au calculateur C un signal signifiant qu'une action de commande volontaire a été exercée sur le panneau de commutation 10. Le calculateur C élabore alors un signal de validation et/ou de prise en compte de la commande sous la forme d'impulsions appliquées à la grille 6.

En effet, dans ce dernier cas, le but recherché est de produire un retour à l'opérateur sous la forme d'un stimuli physiologique appliqué essentiellement au toucher, déjà sollicité par l'appui exercé sur le panneau de commutation 10, éventuellement en complément à une stimulation visuelle ou auditive, par exemple sous la forme d'une modification d'aspect de la zone sollicitée et d'un bip sonore.

Dans l'exemple représenté figure 4, le stimuli tactile est réalisé grâce à un actionnement mécanique en translation de la grille 6 par un organe moteur, ici un électro-aimant 26 commandé par le calculateur C. Cet électro-aimant 26 entraîne un marteau 27 qui vient frapper une enclume 28 solidaire de la grille 6, en produisant ainsi un choc d'amplitude suffisante pour être ressenti par l'opérateur. Un système de butées élastiques 29 réalise la contention de la grille ainsi que l'amortissement du mouvement imprimé.

L'impulsion de mouvement engendrée est calibrée en temps de montée, en durée et en amplitude, de façon à être perçue sans ambiguïté par l'opérateur.

Afin de garantir au mieux le contact du doigt avec la grille au moment de l'impulsion, il est favorable de réaliser une grille délimitant des zones d'appui de petite taille au moins dans une dimension, ou des cercles de diamètre voisin de la surface de contact avec le doigt.

Le mode d'exécution précédemment décrit permet d'obtenir une forte densité de touches par unité de surface et, par conséquent, permet un encombrement plus faible pour une complexité donnée, comparativement aux claviers à boutons-poussoirs.

## Revendications

1. Terminal de communication du type permettant à un opérateur de transmettre manuellement des informations, ce terminal comportant :
   – un panneau de commutation (l0) incluant une multiplicité d'éléments de commutation respectivement munis de plages de commande sensibles à une action manuelle (23), qui s'étendent dans au moins un plan ; et
   – au moins une grille (6) située parallèlement audit plan et à faible distance de celui-ci, cette grille (6) présentant une pluralité d'orifices (7) délimitant les susdites plages (23) et permettant leur accès par un doigt de l'opérateur,
   caractérisé en ce que la susdite grille (6) est mobile par rapport au susdit panneau (l0) et est couplée à des moyens d'actionnement (26) servant à provoquer des déplacements de la grille (6), de manière à engendrer sur le doigt de l'opérateur sollicitant une plage de commande, un stimuli physiologique en réponse à cette sollicitation.

2. Terminal de communication selon la revendication 1,
   caractérisé en ce que le susdit panneau de commutation (l0) consiste en un clavier à touches.

3. Terminal de communication selon la revendication 1,
   caractérisé en ce que le susdit panneau de commutation (l0) consiste en un clavier plat à contacts électroniques sensitifs, par exemple de type capacitif ou inductif.

4. Terminal selon l'une des revendications précédentes,
   caractérisé en ce que les susdits orifices (7) présentent des rebords évasés vers l'extérieur pour permettre un guidage du doigt de l'opérateur.

5. Terminal selon l'une des revendications précédentes,
   caractérisé en ce que les susdits moyens d'actionnement (26) sont commandés par un calculateur (C) assurant la gestion du susdit panneau de commutation.

6. Terminal selon l'une des revendications précédentes,
caractérisé en ce que les susdits moyens d'actionnement comprennent un électro-aimant (26) entraînant un marteau (27) qui vient frapper une enclume (28) solidaire de la grille.

7. Terminal selon l'une des revendications précédentes,
caractérisé en ce que le susdit panneau de commutation est monté sur une structure de support, par l'intermédiaire de moyens transducteurs aptes à engendrer un signal électrique en réponse à une pression exercée sur le panneau de commutation (10), lors d'un actionnement d'un élément de commutation.

8. Terminal selon la revendication 7,
caractérisé en ce que le susdit signal électrique est appliqué au calculateur (C) en vue d'engendrer sur la grille (6) des impulsions de mouvement.

**Patentansprüche**

1. Kommunikationsterminal der Typs, der es einem Bedienungsmann erlaubt, manuell Informationen zu übertragen, wobei besagter Terminal aufweist :
   – eine Schalttafel (10), mit einer Vielzahl von Schaltelementen, die jeweils mit auf eine manuelle Betätigung ansprechenden Steuerbereichen (23) versehen sind, die sich mindestens in einer Ebene erstrecken ; und
   – mindestens ein parallel zur besagten Ebene und in geringer Entfernung von dieser angeordnetes Gitter (6), wobei besagtes Gitter (6) eine Vielzahl von Öffnungen (7) aufweist, welche besagte Bereiche (23) begrenzen und deren Zugang durch einen Finger des Bedienungsmannes ermöglichen,
   dadurch gekennzeichnet, dass besagtes Gitter im Verhältnis zu besagter Tafel (10) beweglich ist und mit Betätigungsmitteln (26) gekuppelt ist, welche das Gitter (6) verschieben, um so auf den Finger des Bedienungsmannes welcher einen Steuerbereich beansprucht, einen physiologischen Reiz als Antwort auf diese Beanspruchung auszuüben.

2. Kommunikationsterminal nach Anspruch 1,
dadurch gekennzeichnet, dass besagte Schalttafel (10) aus einer Tastatur mit Tasten besteht.

3. Kommunikationsterminal nach Anspruch 1,
dadurch gekennzeichnet, dass besagte Schalttafel (10) aus einer flachen Tastatur mit sensiblen elektronischen Kontakten zum Beispiel des kapazitiven oder induktiven Typs besteht.

4. Terminal nach einem der vorhergehenden Ansprüche,
dadurch gekennzeichnet, dass besagte Öffnungen (7) mit sich nach aussen erweiternden Rändern versehen sind, um den Finger des Bedienungsmannes zu führen.

5. Terminal nach einem der vorhergehenden Ansprüche,
dadurch gekennzeichnet, dass die besagten Bedienungsmittel (26) von einem Rechner (C) gesteuert werden, welcher die besagte Schalttafel steuert.

6. Terminal nach einem der vorhergehenden Ansprüche,
dadurch gekennzeichnet, dass besagte Bedienungsmittel einen Elektromagneten (26) aufweisen, welcher einen Hammer (27) betätigt, der auf einen mit dem Gitter fest verbundenen Amboss (28) trifft.

7. Terminal nach einem der vorhergehenden Ansprüche,
dadurch gekennzeichnet, dass besagte Schalttafel auf eine Haltestruktur montiert ist, und zwar durch Wandelmittel welche auf einen auf die Schalttafel (10) ausgeübten Druck hin ein elektrisches Signal erzeugen können, wenn ein Schaltelement betätigt wird.

8. Terminal nach Anspruch 7,
dadurch gekennzeichnet, dass besagtes elektrisches Signal in den Rechner (C) eingegeben wird, um auf dem Gitter (6) Bewegungsimpulse zu erzeugen.

**Claims**

1. Communication terminal of the type enabling an operator to transmit information manually, the terminal comprising:
   – a switching panel (10) including a multiplicity of switching elements respectively provided with control lands (23) responsive to manual action and extending in at least one plane; and
   – at least one grid (6) parallel to said plane and at a small distance therefrom, the arid (6) including a plurality of orifices (7) delimiting said lands (23) and enabling access thereto by a finger of the operator,
   characterised in that said grid (6) is mobile relative to said panel (10) and is coupled to actuator means (26) adapted to impart movement to the grid (6) so as to apply a physiological stimulus to the finger of the operator in response to actuation of a control land.

2. Communication terminal according to claim 1, characterised in that said switching panel (10) is a keyboard.

3. Communication terminal according to claim 1, characterised in that said switching panel (10) is a flat keyboard with touch-sensitive electronic contacts, of the capacitive or inductive type, for example.

4. Terminal according to any one of the preceding claims,
characterised in that said orifices (7) have outwardly flared rims to guide the finger of the operator.

5. Terminal according to any one of the preceding claims,
characterised in that said actuator means (26) are controlled by a computer (C) controlling said switching panel.

6. Terminal according to any one of the preceding claims,
characterised in that said actuator means comprise a solenoid (26) driving a hammer (27) which strikes an anvil (28) fastened to the grid.

7. Terminal according to any one of the preceding claims,
characterised in that said switching panel is mounted on a support structure through transducer means adapted to generate an electrical signal in response to pressure exerted on the switching panel (10) when a switching element is operated.

8. Terminal according to claim 7,
characterised in that said electrical signal is applied to the computer (C) to generate pulsed movement of the grid (6).

FIG.1

FIG.2

FIG.4

FIG.3